(19) Europäisches Patentamt
European Patent Office
Office européen des brevets

(11) **EP 4 534 388 A1**

(12) **EUROPEAN PATENT APPLICATION**
published in accordance with Art. 153(4) EPC

(43) Date of publication:
**09.04.2025 Bulletin 2025/15**

(21) Application number: **22932485.0**

(22) Date of filing: **21.10.2022**

(51) International Patent Classification (IPC):
**B62D 5/04** *(2006.01)*

(52) Cooperative Patent Classification (CPC):
**B62D 5/04; B62D 6/00;** Y02T 10/72

(86) International application number:
**PCT/CN2022/126832**

(87) International publication number:
**WO 2023/226290 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.05.2022 CN 202210584365**

(71) Applicant: **Guangzhou Automobile Group Co.,
Ltd.
Guangzhou, Guangdong 510030 (CN)**

(72) Inventors:
• **CHEN, Jianwu
Guangzhou, Guangdong 511434 (CN)**

• **XUAN, Wenwei
Guangzhou, Guangdong 511434 (CN)**
• **LUO, Yinpeng
Guangzhou, Guangdong 511434 (CN)**
• **ZHANG, Fen
Guangzhou, Guangdong 511434 (CN)**
• **LIU, Yang
Guangzhou, Guangdong 511434 (CN)**

(74) Representative: **Zaboliene, Reda
Metida
Business center Vertas
Gyneju str. 16
01109 Vilnius (LT)**

(54) **VEHICLE STEERING TORQUE CONTROL METHOD AND SYSTEM**

(57) The present application relates to a method and a system for controlling vehicle steering torque, includes: receiving a steering torque X currently requested; obtaining a current vehicle velocity V of the vehicle; identifying a current assistance mode of the vehicle, wherein the current assistance mode at least includes two different modes; obtaining a preset auxiliary function corresponding to the current vehicle velocity in the current assistance mode according to the current assistance mode and the current vehicle velocity V; and correcting the steering torque X according to the torque correction gain to obtain a corrected steering torque $X_{corrected}$; obtaining a motor execution torque by calculating the auxiliary function and the corrected steering torque $X_{corrected}$; controlling the vehicle to change direction according to the motor execution torque. The present application can effectively solve the problem of inconsistency in the steering torque request performance of the EPS executing ADAS in the lane keeping auxiliary function control process under different steering assistance modes.

FIG. 3

**Description**

TECHNICAL FIELD

The present disclosure relates to driving assistance technologies field, in particular to a method and a system for controlling vehicle steering torque.

BACKGROUND

At present, most vehicles have multiple steering assistance modes, that is, there are multiple auxiliary functions, which can be expressed as $y = f_n(x)$, representing a pair of input and output relationship, where the input is an input of the advanced driver assistance system (ADAS) or a driver torque, the output is a motor execution torque output of an electric power steering system (EPS), and n indicates different auxiliary functions of the EPS is in different power assistance modes and at vehicle speeds.

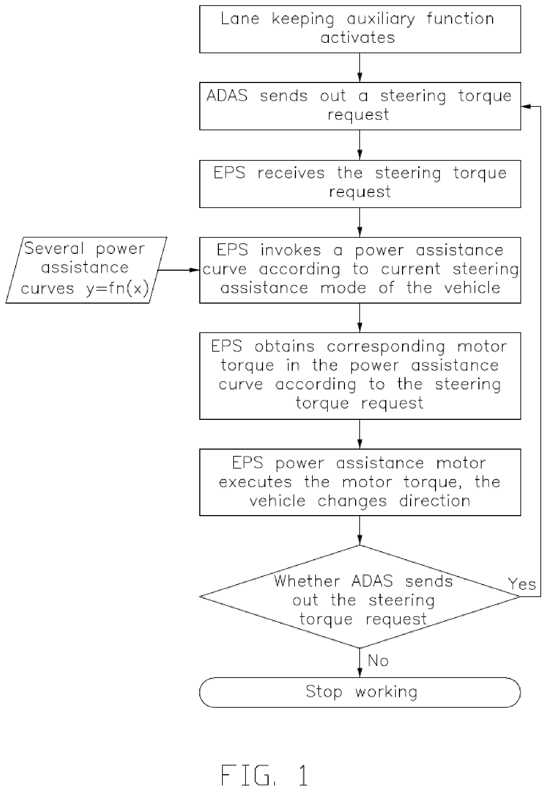

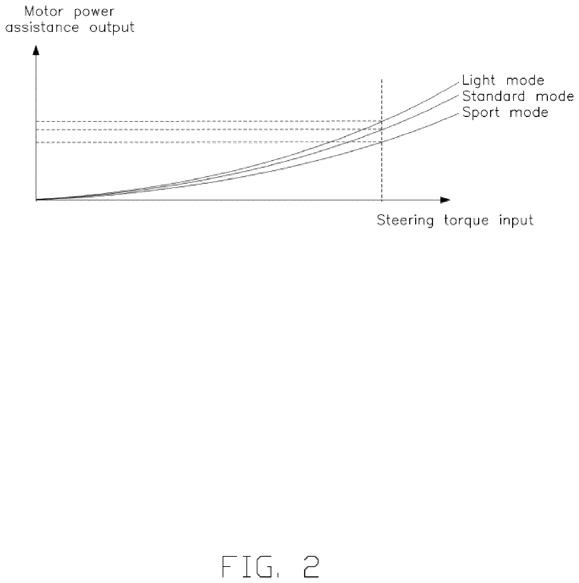

At present, there are two main interaction modes between ADAS and EPS, which are a torque interface control mode and an angle interface control mode. When the ADAS adopts the torque interface control mode, as shown in FIG. 1, at the same vehicle speed, the driver's hand force is simulated to send out a control signal, after the actual EPS receives the steering torque control signal, it invokes a power auxiliary function at the vehicle speed, the hand force torque input by the ADAS is converted into corresponding motor torque, which is executed by the power assistance motor of the EPS to drive the steering mechanism to realize vehicle steering control. The problem with this process is that the ADAS sends out the same steering torque request, and the vehicle is in different steering assistance modes at different times, such as the driver switches the steering assistance mode during the process, the EPS will invoke different power auxiliary functions, so that the EPS will invoke different power auxiliary functions during the control process, so the same ADAS steering torque input, the EPS will finally execute different power assistance motor torques, as shown in FIG. 2. This problem will eventually lead to the ADAS sending out the same steering torque request under the same operating speed, just because the vehicle is in different steering assistance modes, the assistance motor performs different torque output, and then produces different degrees of steering, causing the ADAS to affect a difference in steering control performance of the entire vehicle.

SUMMARY OF THE INVENTION

The present application solves technical problems, providing a method and a system for controlling vehicle steering torque, which may solve technical problems of inconsistent steering torque request performance of the ADAS executed by the EPS in the control process of lane keeping auxiliary function under different steering assistance modes.

To achieve the above purpose, a first embodiment of the present application provides a method for controlling vehicle steering torque includes:

receiving a steering torque X currently requested;
obtaining a current vehicle velocity V of the vehicle;
identifying a current assistance mode of the vehicle, wherein the current assistance mode at least includes two different modes;
obtaining a preset auxiliary function corresponding to the current vehicle velocity V in the current assistance mode according to the current assistance mode and the current vehicle velocity V;
obtaining a torque correction gain according to the current assistance mode, the current vehicle velocity V, and the steering torque X, and correcting the steering torque X according to the torque correction gain to obtain a corrected steering torque $X_{corrected}$, or executing table look-up interpolation according to the current assistance mode, the current vehicle velocity V, and the steering torque X to obtain the corrected steering torque $X_{corrected}$;
obtaining a motor execution torque by calculating the auxiliary function and the corrected steering torque $X_{corrected}$; and
controlling the vehicle to change direction according to the motor execution torque.

Preferably, the current assistance mode at least includes a first mode and a second mode;
obtaining the torque correction gain according to the current assistance mode, the current vehicle velocity V, and the steering torque X, includes:

when the current assistance mode is the first mode, querying pre-stored gain data according to the current vehicle velocity and the steering torque X to obtain the torque correction gain $G_{mode1,v,x}$ when the current assistance mode is the first mode, the vehicle velocity is the V, and the steering torque is the X;

when the current assistance mode is the second mode, querying pre-stored gain data according to the current vehicle velocity and the steering torque X, or calculating in real time according to the current vehicle velocity and the steering torque X to obtain the torque correction gain $G_{mode2,v,x}$ when the current assistance mode is the second mode, the vehicle velocity is the V, and the steering torque is the X.

Preferably, calculating in real time according to the current vehicle velocity and the steering torque X to obtain the torque correction gain $G_{mode2,v,x}$ when the current assistance mode is the second mode, the vehicle velocity is the V, and the steering torque is the X, includes:

obtaining the auxiliary function $Y=F_{mode1,v}(X)$ corresponding to the current vehicle velocity V in the first mode;

obtaining the auxiliary function $Y=F_{mode2,v}(X)$ corresponding to the current vehicle velocity V in the second mode;

obtaining the torque correction gain $G_{mode1,v,x}$ when in the first mode, the vehicle velocity is the V, and the steering torque is the X;

calculating the torque correction gain $G_{mode2,v,x}$ according to the steering torque X, the auxiliary function $Y=F_{mode1,v}(X)$, the auxiliary function $Y=F_{mode2,v}(X)$, and the torque correction gain Gmode1,v,x;

wherein,

$$G_{mode2,v,x} = \frac{F^{-1}_{mode2,v}\left(F_{mode1,v}\left(X * G_{mode1,v,x}\right)\right)}{X}.$$

Preferably, executing table look-up interpolation according to the current assistance mode, the current vehicle velocity V, and the steering torque X to obtain the corrected steering torque $X_{corrected}$, includes:

obtaining the auxiliary function $Y=F_{mode1,v}(X)$ corresponding to the current vehicle velocity V in the first mode;
obtaining the torque correction gain $G_{mode1,v,x}$ when in the first mode, the vehicle velocity is the V, and the steering torque is the X;
calculating a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$;
querying a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$, wherein, the assistance parameter table includes a plurality of steering torques and motor execution torques in different modes corresponding to the plurality of steering torques at different velocities;
performing linear interpolation according to the steering torque interval $[X_1,X_2]$ and the execution torque interval $[Y_1,Y_2]$ to obtain the corrected steering torque $X_{corrected}$.

Preferably, performing linear interpolation according to the steering torque interval $[X_1,X_2]$ and the execution torque interval $[Y_1,Y_2]$ to obtain the corrected steering torque $X_{corrected}$, includes:

$$X_{corrected} = X_1 + (X_2 - X_1)\frac{Y_{output} - Y_1}{Y_2 - Y_1}$$

performing linear interpolation according to                                                                to calculate the corrected steering torque Xcorrected.

Preferably, the method further includes:
calculating the torque correction gain $G_{mode2,v,x}$ according to the corrected steering torque $X_{corrected}$, storing the calculated torque correction gain $G_{mode2,v,x}$ in association with the second mode, the vehicle velocity V, and the steering torque X as the gain data, after performing linear interpolation according to the steering torque interval $[X_1,X_2]$ and the execution torque interval $[Y_1,Y_2]$ to obtain the corrected steering torque $X_{corrected}$.

A second embodiment of the present application provides a method for controlling vehicle steering torque includes:

a torque input unit configured to receive a steering torque X currently requested;

a vehicle velocity obtaining unit configured to obtain a current vehicle velocity V of the vehicle;

a mode identifying unit configured to identify a current assistance mode of the vehicle, wherein the current assistance mode at least includes two different modes;

an auxiliary function obtaining unit configured to obtain a preset auxiliary function corresponding to the current vehicle velocity in the current assistance mode according to the current assistance mode and the current vehicle velocity V;

a torque correction unit configured to obtain a torque correction gain according to the current assistance mode, the current vehicle velocity V, and the steering torque X, correcting the steering torque X according to the torque correction gain to obtain a corrected steering torque $X_{corrected}$; or executing table look-up interpolation according to the current assistance mode, the current vehicle velocity V, and the steering torque X to obtain the corrected steering torque $X_{corrected}$;

an assistance calculating unit configured to obtain a motor execution torque by calculating the auxiliary function and the corrected steering torque $X_{corrected}$; and

a steering control unit configured to control the vehicle to change direction according to the motor execution torque.

Preferably, the current assistance mode at least includes a first mode and a second mode;

the torque correction unit includes:

a first correction sub-unit configured to when the current assistance mode is the first mode, query pre-stored gain data according to the current vehicle velocity and the steering torque X to obtain a torque correction gain $G_{mode1,v,x}$ when the current assistance mode is the first mode, the vehicle velocity is the V, and the steering torque is the X;

a second correction sub-unit configured to when the current assistance mode is the second mode, query pre-stored gain data according to the current vehicle velocity and the steering torque X, or calculate in real time according to the current vehicle velocity and the steering torque X to obtain the torque correction gain $G_{mode2,v,x}$ when the current assistance mode is the second mode, the vehicle velocity is the V, and the steering torque is the X.

Preferably, the second correction sub-unit is configured to:

obtain the auxiliary function $Y=F_{mode1,v}(X)$ corresponding to the current vehicle velocity V in the first mode;

obtain the auxiliary function $Y=F_{mode2,v}(X)$ corresponding to the current vehicle velocity V in the second mode;

obtain the torque correction gain $G_{mode1,v,x}$ when in the first mode, the vehicle velocity is the V, and the steering torque is the X;

calculate the torque correction gain $G_{mode2,v,x}$ according to the steering torque X, the auxiliary function $Y=F_{mode1,v}(X)$, the auxiliary function $Y=F_{mode2,v}(X)$, and the torque correction gain Gmodel,v,x;

wherein,

$$G_{mode2,v,x} = \frac{F_{mode2,v}^{-1}(F_{mode1,v}(X * G_{mode1,v,x}))}{X}.$$

Preferably, the current assistance mode at least includes the first mode and the second mode, the torque correction unit further includes a fourth correction sub-unit;
the fourth correction sub-unit is configured to:

obtain the auxiliary function $Y=F_{mode1,v}(X)$ corresponding to the current vehicle velocity V in the first mode;

obtain the torque correction gain $G_{mode1,v,x}$ when in the first mode, the vehicle velocity is the V, and the steering torque is the X;

calculate a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$;

query a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$; the assistance parameter table includes a plurality of steering torques and motor execution torques in different modes corresponding to the plurality of steering torques at different velocities;

perform linear interpolation according to the steering torque interval $[X_1,X_2]$ and the execution torque interval $[Y_1,Y_2]$ to obtain the corrected steering torque $X_{corrected}$.

The method and the system for controlling vehicle steering torque have beneficial effects at least as follows:

The method and the system are applied to the EPS, fully considering the non-linear problem of the power auxiliary function in the real development process, and correcting the requested steering torque X according to the current assistance mode and the current vehicle speed V, so that the above method and system can be applied to the correction parameter calculation of any EPS auxiliary function/relationship, the input and output of the EPS in different assistance modes are finally unified, ensuring that under the same vehicle velocity, the ADAS sends out the same steering torque request, and the power assistance motor performs the same torque output in different steering assistance modes of the vehicle, and then produces a consistent degree of steering, therefore, it can effectively solve the problem of inconsistency in the steering torque request performance of the ADAS executed by the EPS in the control process of the lane keeping auxiliary function under different steering assistance modes, reducing performance calibration workload, reducing personnel investment, shorten development cycle. Compared with other correction schemes that regard the auxiliary function as a linear expression, the correction accuracy of each embodiment of the present application is higher, and may maintain higher EPS execution consistency.

Other features and advantages of the application will be set forth in the ensuing description.

BRIEF DESCRIPTION OF THE DRAWINGS

**In** order to more clearly illustrate the technical solutions in the embodiments of the present application or the prior art, the following will briefly introduce the drawings that need to be used in the description of the embodiments or the prior art. Obviously, the drawings in the following description are only some embodiments of the present application, and those skilled in the art can also obtain other drawings according to these drawings without creative work.

FIG. 1 is a flow chart of a method for controlling torque interface described in the background.
FIG. 2 is a schematic diagram of under the same operating condition vehicle speed and steering torque request, the vehicle is in different steering assistance modes, resulting in different assistance motor torque outputs described in the background.
FIG. 3 is a flow chart of an embodiment of the present application of a method for controlling vehicle steering torque.
FIG. 4 is a flow chart of an interact process of ADAS and EPS when the method of FIG. 3 applied in EPS.
FIG. 5 is a schematic diagram of a result of the method of FIG. 3.
FIG. 6 is a schematic diagram of an embodiment of the present application of a system for controlling vehicle steering torque.
FIG. 7 is a schematic diagram of another embodiment of the present application of a system for controlling vehicle steering torque.

DETAILED DESCRIPTION

Various exemplary embodiments, features, and aspects of the present application will be described in detail below with reference to the accompanying drawings. In addition, in order to better illustrate the present application, numerous specific details are given in the following specific examples. It will be understood by those skilled in the art that the present application may be practiced without certain of the specific details. In some embodiments, means known to those skilled in the art are not described in detail in order to highlight the gist of the present application.

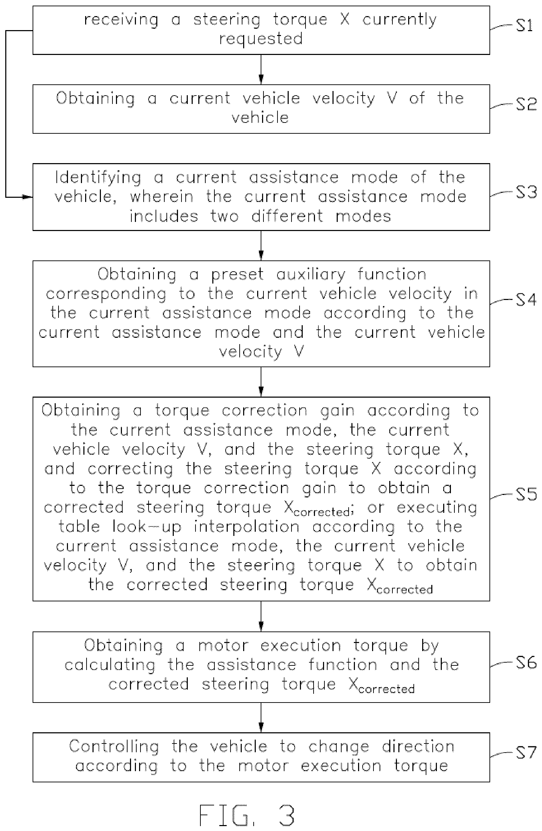

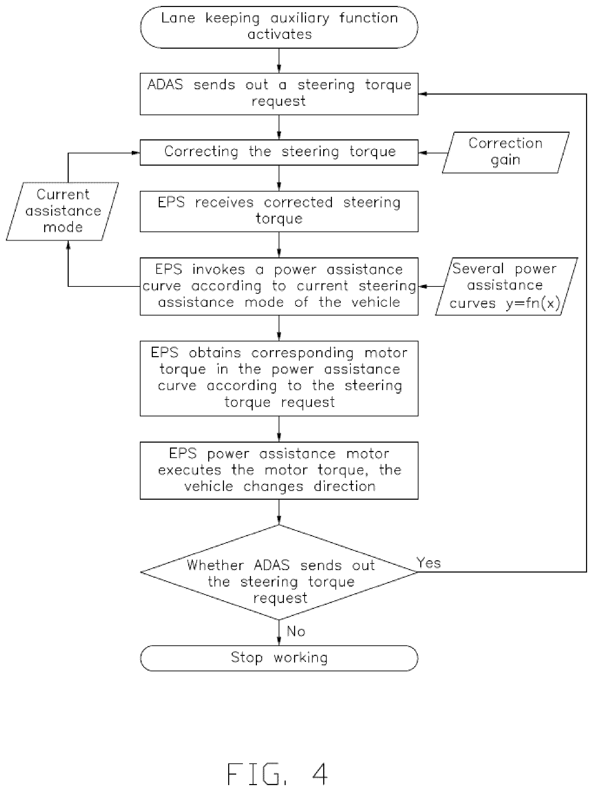

An embodiment of the present application provides a method for controlling vehicle steering torque, the method is applied in an electric power steering system (EPS), the EPS execute the steps of the method. In the present embodiment, an interaction of an advanced driver assistance system (ADAS) and the EPS uses a method for controlling torque interface, that is the ADAS sends out a request of steering torque X, the EPS receives the steering torque X, and simulates a driver's manual input, so a steering wheel generates corresponding a steering torque and a steering angle, and feeds back the steering torque and the steering angle of the steering wheel in real-time, the ADAS realizes an angle loop control of the steering wheel. Referring to FIGS. 3 and 4, the method of the present application includes following:

At block S1, receiving the steering torque X currently requested.

In detail, during the vehicle is running, a lane keeping auxiliary function is activated, the ADAS transmits the steering torque X to the EPS through a torque interface.

At block S2, obtaining a current vehicle velocity V of the vehicle.

In detail, the vehicle installs a sensor device of detecting vehicle velocity, the sensor device may detect the vehicle velocity in real-time and transmit the vehicle velocity to a CAN bus, for being invoked by functional units of the vehicle. Through reading CAN bus signals in the step, the vehicle velocity detected by the sensor device can be obtained, so obtaining the current vehicle velocity V.

At block S3, identifying a current assistance mode of the vehicle, wherein the current assistance mode at least includes two different modes.

In detail, the vehicle normally includes a plurality of assistance modes, such as a light mode, a standard mode, a sport mode, etc. as conventional defined. The assistance modes of the vehicle in the present embodiment at least include two types, one of which may be the standard mode, other modes can be extendedly set according to different requirements. In the present embodiment, parameters of the standard mode may be preassigned, parameters of the other modes may be obtained based on the standard mode, for details, please refer to the following content.

At block S4, obtaining a preset auxiliary function corresponding to the current vehicle velocity in the current assistance mode according to the current assistance mode and the current vehicle velocity V.

In detail, the auxiliary function may be expressed as: $Y = F_{ith\ mode,v}(X)$; Y is an output motor execution torque, $F_{ith\ mode,v}(X)$ is an auxiliary function corresponding to the assistance mode being an ith mode and the vehicle velocity being V, the $F_{ith\ mode,v}(X)$ is relative to the steering torque X requested by the ADAS. The parameters of the above functions are pre-set according to different assistance modes and different velocities of the vehicle, and are stored in a storage device of the vehicle as pre-stored data, so as to be invoked when the method of this embodiment is implemented.

It should be noted that in the real development process, the auxiliary function is shown as overall linearity or piecewise linearity, but in fact there is no ideal linear performance, so in this embodiment based on the given known the auxiliary function used under different modes, further study the correction gain according to the specific actual velocity, to solve the problem of inconsistency in the steering torque request performance of the EPS executes the ADAS.

At block S5, obtaining a torque correction gain according to the current assistance mode, the current vehicle velocity V, and the steering torque X, and correcting the steering torque X according to the torque correction gain to obtain a corrected steering torque $X_{corrected}$. Or executing table look-up interpolation according to the current assistance mode, the current vehicle velocity V, and the steering torque X to obtain the corrected steering torque $X_{corrected}$.

In detail, when correcting the steering torque requested by the ADAS, the present embodiment considers the current assistance mode and the current vehicle velocity V, however, a present correction method merely considers the assistance mode, without any velocity factors of the vehicle. For instance, the correction strategy of steering torque under different vehicle velocity conditions under each assistance mode can be calibrated according to test, so as to be invoked when the method of this embodiment is implemented. The present embodiment proposes two kinds of schemes that the steering torque requested by ADAS is corrected, the first one is to calculate the torque correction gain, and multiply the torque correction gain and the steering torque X to obtain corrected steering torque $X_{corrected}$. The second one is to obtain the corrected steering torque $X_{correct}t_{ed}$ directly through the table look-up interpolation mode; in this embodiment, the first scheme is preferentially adopted, and when the first scheme cannot accurately obtain the torque correction gain, using the second scheme to obtain the corrected steering torque $X_{corrected}$.

At block S6, obtaining a motor execution torque by calculating the auxiliary function and the corrected steering torque $X_{corrected}$.

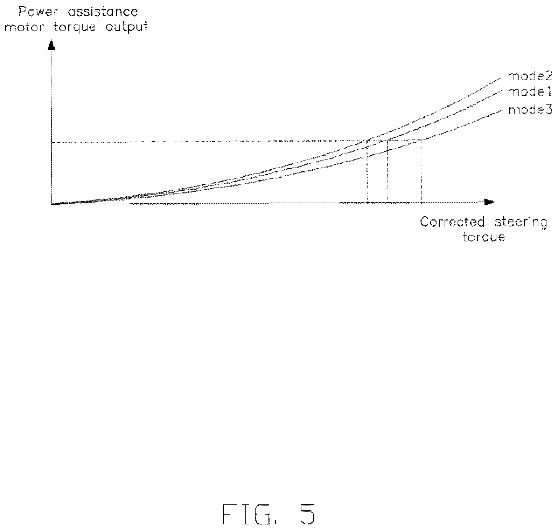

In detail, according to the auxiliary function $Y = F_{ith\ mode,v}(X)$, the motor execution torque may be rapidly calculated. At last, a result can be shown as in FIG. 5, that is in different modes, the motor execution torques are the same input by the steering torque X under the same vehicle velocity.

At block S7, controlling the vehicle to change direction according to the motor execution torque.

In detail, an EPS assistance motor executes the motor torque, so the vehicle may change direction accordingly.

After executing block S7, the EPS detects whether the ADAS outputs a new steering torque X in real time, if yes, the above blocks are executed renewedly, if not, the control process ends.

In some more specific embodiments, the current assistance mode at least includes a first mode and a second mode. In detail, the first mode is configured as the standard mode, parameters of other modes may be obtained based on the first mode.

In the block S5, obtaining the torque correction gain according to the current assistance mode, the current vehicle velocity V, and the steering torque X, further includes:

At block S51, when the current assistance mode is the first mode, querying pre-stored gain data according to the current vehicle velocity and the steering torque X to obtain the torque correction gain $G_{mode1,v,x}$ when the current assistance mode is the first mode, the vehicle velocity is the V, and the steering torque is the X.

In detail, since the first mode is the standard mode, so the torque correction gain of the first mode in different velocities of the vehicle and different steering torque requests is a preset fixed value. Preferably but not limited, the torque correction gain of the first mode in different velocities of the vehicle and different steering torque requests may be set as 1, for being conveniently calculated for the gain of other modes. In the example, block S51 may be simplified as: when the current assistance mode is the first mode, directly determining the torque correction gain $G_{mode1,v,x}$ as 1, multiplying the requested steering torque X and the torque correction gain $G_{mode1,v,x}$ to obtain the requested steering torque X. Thus, it can also be understood as being in the first mode, the torque is not corrected. The torque correction gain $G_{mode1,v,x}$ in the first mode is 1 is set for example as above, the torque correction gain $G_{mode1,v,x}$ in the first mode may be other values other than 1.

At block S52, when the current assistance mode is the second mode, querying pre-stored gain data according to the current vehicle velocity and the steering torque X, or calculating in real time according to the current vehicle velocity and the steering torque X to obtain the torque correction gain $G_{mode2,v,x}$ when the assistance mode is the second mode, the vehicle velocity is the V, and the steering torque is the X.

In detail, in an example of an embodiment of the present application, the torque correction gain $G_{mode2,v,x}$ corresponding to all velocities of the vehicle and steering torques in the second mode can be pre-calibrated and stored, laterally during the driving process of the vehicle, querying the pre-stored gain data to find the corresponding torque correction gain $G_{mode2,v,x}$, and then correcting the torque. It should be known that, it is theoretically possible to calibrate the gain at all velocities and steering torques, but for this case the calibration effort would be very large. Thus, proposing another example in the present embodiment, that is only the torque correction gain $G_{mode2,v,x}$ corresponding to discrete several velocities of the vehicle and steering torques in the second mode is calibrated in advance, and the torque correction gains corresponding to the vehicle velocity and steering torques that are not pre-calibrated cannot be queried directly, but obtained through real-time calculation to reduce the calibration workload. Additionally, the torque correction gain calculated in real time can be associated with the mode, the vehicle velocity, and the steering torque and stored in the gain data as a subsequent supplement to the calibration work.

In some more specific examples, in the block S52, calculating in real time according to the current vehicle velocity and the steering torque X to obtain the torque correction gain $G_{mode2,v,x}$ when the assistance mode is the second mode, further includes:

Obtaining the auxiliary function $Y=F_{mode1,v}(X)$ corresponding to the current vehicle velocity V in the first mode.

Obtaining the auxiliary function $Y=F_{mode2,v}(X)$ corresponding to the current vehicle velocity V in the second mode.

Obtaining the torque correction gain $G_{mode1,v,x}$ when in the first mode, the vehicle velocity is the V, and the steering torque is the X.

Calculating the torque correction gain $G_{mode2,v,x}$ according to the steering torque X, the auxiliary function $Y=F_{mode1,v}(X)$, the auxiliary function $Y=F_{mode2,v}(X)$, and the torque correction gain $G_{mode1,v,x}$.

Wherein,

$$G_{mode2,v,x} = \frac{F_{mode2,v}^{-1}\left(F_{mode1,v}\left(X * G_{mode1,v,x}\right)\right)}{X}.$$

In detail, the auxiliary function corresponding to different velocities of the vehicle in different modes and the torque correction gain $G_{mode1,v,x}$ of the first mode are known, that is, the torque correction gain $G_{mode2,v,x}$ of the second mode can be calculated according to the above formula; the calculated torque correction gain $G_{mode2,v,x}$ and the second mode, the velocity V, and the steering torque X are associated and stored as the gain data.

According to the above formula, the above calculation of the torque correction gain $G_{mode2,v,x}$ can only be used when the auxiliary function is clear, continuous, and an inverse function can be directly calculated. However, in some working conditions, since the auxiliary function cannot be directly obtained and the inverse function cannot be directly expressed, the torque correction gain $G_{mode2,v,x}$ cannot be calculated, therefore, for this part of the working conditions, the present embodiment proposes:

At block S53, executing table look-up interpolation according to the current assistance mode, the current vehicle velocity V, and the steering torque X to obtain the corrected steering torque $X_{corrected}$. In detail, the block S53 further includes:

Obtaining the auxiliary function $Y=F_{mode1,v}(X)$ corresponding to the current vehicle velocity V in the first mode.

Obtaining the torque correction gain $G_{mode1,v,x}$ when in the first mode, the vehicle velocity is the V, and the steering torque is the X.

Calculating a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$.

Querying a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$. The assistance parameter table includes a plurality of steering torques and motor execution torques in different modes corresponding to the plurality of steering torques at different velocities.

Performing linear interpolation according to the steering torque interval $[X_1,X_2]$ and the execution torque interval $[Y_1,Y_2]$ to obtain the corrected steering torque $X_{corrected}$.

$$X_{corrected} = X_1 + (X_2 - X_1)\frac{Y_{output} - Y_1}{Y_2 - Y_1}$$

Performing linear interpolation according to $\phantom{x}$ to calculate the corrected steering torque Xcorrected.

Furthermore, the auxiliary function depends on an EPS development model and a chassis tuning in the vehicle development process. There is no fixed geometric or algebraic relationship, but the following three points can be confirmed:

(1) If the input of the torque request and the output of the assistance motor torque are defined in a positive direction, the auxiliary function is a centrally symmetric function, and the positive or negative of an input value of the torque request and an output value of the motor assistance torque only indicates a clockwise/counterclockwise rotation of the torque. Therefore, an analysis of the torque output problem only needs to focus on a positive torque input and a positive torque output.

(2) In a positive value region, the auxiliary function satisfies a monotonically increasing positive correlation, that is, under any mode and vehicle velocity, Y increases with the increase of X. That is, any X value has one and only one corresponding Y. Conversely, any Y value also has one and only one corresponding X.

Thus, the correction parameters can be calculated through the existing auxiliary function $Y=F_{ith\ mode,v}(X)$ (determined by the EPS internal model and actual vehicle tuning), which can be understood in conjunction with FIG. 5. According to the purpose of the method in this embodiment, it is necessary to obtain a series of correction parameters $G_{ith\ mode,v,x}$ of different assistance modes i, so that the steering torque X is input at the same vehicle velocity, and the final assistance motor execution torque Y obtained in different assistance modes i, that is:

$$Y=F_{mode1,v}(G_{mode1,v,x}*X)=F_{mode2,v}(G_{mode2,v,x}*X) \quad (1)$$

Thus, the EPS only provides a function relationship of different assistance modes and different velocities of the vehicle, selecting a first assistance mode a first mode, presetting the corrected gain of the first assistance mode, that is calculating the corrected gain of the first assistance mode corresponding to any mode the ith mode:

$$G_{mode2,v,x} = \frac{F^{-1}_{mode2,v}(F_{mode1,v}(X * G_{mode1,v,x}))}{X}.$$

It should be noted that, the correction of the torque of the other modes can be referred to the second mode.

$G_{mode1,v,x}$ is an expression of the correction gain when in the first mode, the vehicle velocity is the V, and the steering torque is the X, if no specific requirements, $G_{mode1,v,x}$ may be defaulted as 1, and defaulted as other values according to other requirements. $G_{ith\ mode,\ v,x}$ is an expression of the correction gain when in the other mode, the vehicle velocity is the V, and the steering torque is the X, which may be obtained by calculating by the formular. $F_{model,v}$ is the auxiliary function in a situation of the first mode and the velocity V of the vehicle. $F^{-1}_{mode1,v}$ is an inverse function of the auxiliary function in the situation of the first mode and the velocity V of the vehicle, that is invertedly calculating the input value by given the output value.

If $Y=F_{ith\ mode,v}(X)$ meets a directly proportional relationship, that is $Y=k_{ith\ mode,v}*X$, and if the correction gain $G_{mode\ 1,v,x}$ in the first assistance mode is the first mode is 1, that is:

Proving:

$$G_{\text{mode\_n,v,x}} = \frac{F^{-1}_{\text{mode1,v}} F_{\text{mode1,v}}(X * G_{\text{mode1,v,x}})}{X} = \frac{k_{mode1,v}}{k_{mode\_n,v}}$$

Additionally, due to the objective auxiliary function, there may be no existing expression, or it may be a piecewise function, or even it may be composed of discrete points, and it is impossible to conveniently realize the inverse change operation of $F^{-1}_{\text{mode1,v}}$, so the formula (2) is very inconvenient when used in practice. The embodiment further proposes a method to realize the calculation of the correction parameters. For the convenience of explanation, that is, the "table look-up interpolation method", the following two modes, the first mode and the second mode, are taken as examples, which can actually be extended to more modes, the specific implementation steps are as follows:

Step 1: obtaining a mapping relationship $X \rightarrow Y$ between the assistance motor torque output of the EPS and the steering torque request, in any form, and selecting the standard mode as the first mode.

Step 2: setting a discrete velocity value $[V1, V2,..., V_{max1}]$ and a steering torque input value $[X1, X2,..., X_{max2}]$, the setting methods include but are not limited to equal interval setting, equal proportional relationship setting, etc., and the more discrete points are selected and the higher the density is, the smaller the final calculation error will be.

Step 3: calculating a corresponding assistance motor output torque table/matrix $Y_{\text{mode1/2,V1/V2/...Vmax1,X1/X2/...Xmax2}}$, according to the velocity value and the steering torque input value of step2, and through the input-output mapping relationship of the two assistance modes obtained by step1, here are two max1×max2 tables, or a matrix of 2×max1×max2.

Step 4: setting all the gains $G_{\text{mode1/2,V1/V2/...Vmax1,X1/X2/...Xmax2}}$ of the first mode being the standard mode as 1, the gain $G_{\text{mode2/2,V1/V2/...Vmax1,X1/X2/...Xmax2}}$ of the second mode being another mode is a quantity to be calculated.

Step 5: the EPS obtains the same output as that in the first mode in the first assistance mode, in order to make a specific vehicle velocity $V_n$ and an input $X_n$ in the second mode, directly calculates the vehicle speed $V_n$ and the motor torque output value corresponding to $X_n * G_{\text{mode1,Vn,Xn}}$ in the first mode, (if there is no corresponding value in the table/matrix $Y_{\text{mode1,V1/V2/...Vmax1,x1/x2/...xmax2}}$, approximately obtaining $Y_{\text{output,Vn,Xn}}$ by linear interpolation), and looks up the table in the velocity $V_n$ of the vehicle and the table/matrix $Y_{\text{mode2,V1/V2/...Vmax1,X1/X2/...Xmax2}}$ in the second mode to obtain $X_{\text{mode2,Vn,Xn}}$ corresponding to the same assistance motor torque output $Y_{\text{output,Vn,Xn}}$. A specific operation method is divided into two sub-steps:

Step 5-1: based on the result table of step3, determining the value $Y_{\text{output,Vn,Xn}}$ located in a Y interval $[Y_1, Y_2]$ in the table/matrix $Y_{\text{mode2,V1/V2/...Vmax1,X1/X2/...Xmax2}}$ of the second mode, and a X interval $[X_1, X_2]$ corresponding to the Y interval $[Y_1, Y_2]$. The motor execution torque output $Y_1$ corresponds to the requested steering torque $X_1$, and the motor execution torque output $Y_2$ corresponds to the requested steering torque $X_2$.

Step 5-2: obtaining $X_{\text{mode2,Vn,Xn}}$ by performing linear interpolation to the X interval $[X_1, X_2]$.

$$X_{corrected} = X_1 + (X_2 - X_1)\frac{Y_{output} - Y_1}{Y_2 - Y_1}$$

Step 6: calculating the gain $G_{\text{mode2,Vn,Xn}} = X_{\text{mode2,Vn,Xn}}/Xn$.

Step 7: looping steps 5 and 6, selecting different velocity points of the vehicle and input torques to calculate the gain values corresponding to all concerned velocities of the vehicle and torques, obtaining $G_{\text{mode2,V1/V2/...Vmax1,X1/X2/...Xmax2}}$.

Step 8: if there are more assistance modes ith modes besides mode0/1, repeating steps 1~7 in the same way to obtain the gain value $G_{\text{ith mode,Vn,Xn}}$ of any mode.

Step 9: finally obtaining discrete gain parameters (matrix n+1×max1×max2) in all modes through steps 1~8, storing as the gain data, during the actual use of the correction parameters, other working conditions not included in the matrix, obtaining actual values through interpolation calculation.

Preferably, the method further includes:

After performing linear interpolation according to the steering torque interval $[X_1, X_2]$ and the execution torque interval $[Y_1, Y_2]$ to obtain the corrected steering torque $X_{corrected}$, calculating the torque correction gain $G_{\text{mode2,v,x}}$ according to the corrected steering torque $X_{corrected}$, storing the calculated torque correction gain $G_{\text{mode2,v,x}}$ in association with the second mode, the vehicle velocity V, and the steering torque X as the gain data.

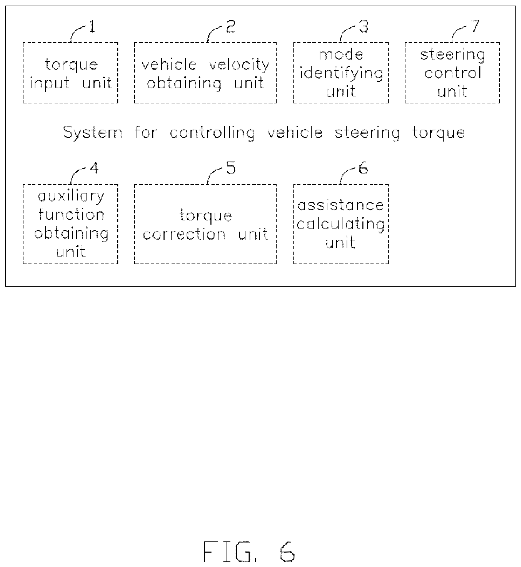

Another embodiment of the present application provides a system for controlling vehicle steering torque, which can be used as a functional system of the EPS and corresponding to the method for controlling vehicle steering torque of the above embodiments, and execute the steps of the method for controlling vehicle steering torque of the above embodiments. In detail, referring to FIG. 6, the system of the present embodiment includes following a plurality of functional units:

A torque input unit 1 configured to receive a steering torque X of a current request.

A vehicle velocity obtaining unit 2 configured to obtain a current vehicle velocity V of the vehicle.

A mode identifying unit 3 configured to identify a current assistance mode of the vehicle, the current assistance mode at least includes two different modes.

An auxiliary function obtaining unit 4 configured to obtain a preset auxiliary function corresponding to the current vehicle velocity in the current assistance mode according to the current assistance mode and the current vehicle velocity V.

A torque correction unit 5 configured to obtain a torque correction gain according to the current assistance mode, the current vehicle velocity V, and the steering torque X, correcting the steering torque X according to the torque correction gain to obtain a corrected steering torque $X_{corrected}$; or executing table look-up interpolation according to the current assistance mode, the current vehicle velocity V, and the steering torque X to obtain the corrected steering torque Xcorrected.

An assistance calculating unit 6 configured to obtain a motor execution torque by calculating the auxiliary function and the corrected steering torque $X_{corrected}$. And

A steering control unit 7 configured to control the vehicle to change direction according to the motor execution torque.

Preferably, the current assistance mode at least includes a first mode and a second mode.

The torque correction unit 5 further includes:

A first correction sub-unit configured to when the current assistance mode is the first mode, query pre-stored gain data according to the current vehicle velocity and the steering torque X to obtain a torque correction gain $G_{mode1,v,x}$ when the assistance mode is the first mode, the vehicle velocity is the V, and the steering torque is the X.

A second correction sub-unit configured to when the current assistance mode is the second mode, query pre-stored gain data according to the current vehicle velocity and the steering torque X, or calculate in real time according to the current vehicle velocity and the steering torque X to obtain the torque correction gain $G_{mode2,v,x}$ when the assistance mode is the second mode, the vehicle velocity is the V, and the steering torque is the X.

A third correction sub-unit configured to correct the steering torque X to obtain the corrected steering torque $X_{corrected}$ according to the torque correction gain.

Preferably, the second correction sub-unit is specifically configured to:

Obtain the auxiliary function $Y=F_{mode1,v}(X)$ corresponding to the current vehicle velocity V in the first mode.

Obtain the auxiliary function $Y=F_{mode2,v}(X)$ corresponding to the current vehicle velocity V in the second mode.

Obtain the torque correction gain $G_{mode1,v,x}$ when in the first mode, the vehicle velocity is the V, and the steering torque is the X.

Calculate the torque correction gain $G_{mode2,v,x}$ according to the steering torque X, the auxiliary function $Y=F_{mode1,v}(X)$, the auxiliary function $Y=F_{mode2,v}(X)$, and the torque correction gain Gmodel,v,x.

Wherein,

$$G_{mode2,v,x} = \frac{F_{mode2,v}^{-1}(F_{mode1,v}(X * G_{mode1,v,x}))}{X}.$$

Preferably, the current assistance mode at least includes the first mode and the second mode. The torque correction unit further includes a fourth correction sub-unit.

The fourth correction sub-unit is configured to:

Obtain the auxiliary function $Y=F_{mode1,v}(X)$ corresponding to the current vehicle velocity V in the first mode.

Obtain the torque correction gain $G_{mode1,v,x}$ when in the first mode, the vehicle velocity is the V, and the steering torque is the X.

Calculate a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$.

Query a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$; the assistance parameter table includes a plurality of steering torques and motor execution torques in different modes corresponding to the plurality of steering torques at different velocities.

Perform linear interpolation according to the steering torque interval $[X_1,X_2]$ and the execution torque interval $[Y_1,Y_2]$ to obtain the corrected steering torque $X_{corrected}$.

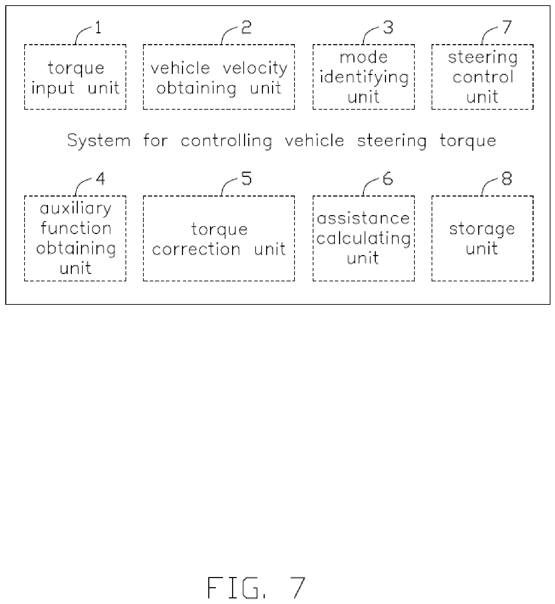

In some more specific embodiments, referring to FIG. 7, the system further includes:

A storage unit 8 configured to, after the fourth correction sub-unit performs linear interpolation according to the steering torque interval $[X_1,X_2]$ and the execution torque interval $[Y_1,Y_2]$ to obtain the corrected steering torque $X_{corrected}$, calculate the torque correction gain $G_{mode2,v,x}$ according to the corrected steering torque $X_{corrected}$, store the calculated torque correction gain $G_{mode2,v,x}$ in association with the second mode, the vehicle velocity V, and the steering torque X as the gain data. The storage unit 8 further configured to, after the second correction sub-unit obtains the torque correction gain $G_{mode2,v,x}$, store the calculated torque correction gain $G_{mode2,v,x}$ in association with the second mode, the vehicle velocity V, and the steering torque X as the gain data.

The system of the above-described embodiments is only illustrative, wherein the units described as separate components may or may not be physically separated, and the components shown as units may or may not be physical units, that is, they may located in one place, or can be distributed to multiple network elements. Part or all of the modules can be selected according to actual needs to realize the purpose of the solution of the system of the embodiment.

It should be noted that the system of the above-mentioned embodiment corresponds to the method of the above-mentioned embodiment, therefore, the unspecified parts of the system of the above-mentioned embodiment can be obtained by referring to the content of the method of the above-mentioned embodiment, that is, the specific steps recorded in the method of the above-mentioned embodiment can be understood as the functions that can be realized by the system of the above embodiment, and will not be repeated here.

Moreover, if the system of the above-mentioned embodiment is realized in the form of a software function unit and sold or used as an independent product, it can be stored in a computer-readable storage medium. Therefore, as another embodiment, the present application also proposes a computer-readable storage medium, on which a computer program is stored, and when the computer program is executed by a processor, the steps of the method for controlling vehicle steering torque described in the above-mentioned embodiments are realized.

It can be seen from the above description that each embodiment of the present application is applied to the EPS, fully considering the non-linear problem of the power auxiliary function in the real development process, and correcting the requested steering torque X according to the current assistance mode and the current vehicle speed V, so that the above method and system can be applied to the correction parameter calculation of any EPS auxiliary function/relationship, the input and output of the EPS in different assistance modes are finally unified, ensuring that under the same vehicle velocity, the ADAS sends out the same steering torque request, and the power assistance motor performs the same torque output in different steering assistance modes of the vehicle, and then produces a consistent degree of steering, therefore, it can effectively solve the problem of inconsistency in the steering torque request performance of the ADAS executed by the EPS in the control process of the lane keeping auxiliary function under different steering assistance modes, reducing performance calibration workload, reducing personnel investment, shorten development cycle. Compared with other correction schemes that regard the auxiliary function as a linear expression, the correction accuracy of each embodiment of the present application is higher, and may maintain higher EPS execution consistency.

Having described various embodiments of the present invention, the foregoing description is exemplary, not exhaustive, and is not limited to the disclosed embodiments. Many modifications and alterations will be apparent to those of ordinary skill in the art without departing from the scope and spirit of the described embodiments. The terminology used herein is chosen to best explain the principle of each embodiment, practical application or technical improvement in the market, or to enable other ordinary skilled in the art to understand each embodiment disclosed herein.

**Claims**

1. A method for controlling vehicle steering torque comprising:

    receiving a steering torque X currently requested;
    obtaining a current vehicle velocity V of the vehicle;
    identifying a current assistance mode of the vehicle, wherein the current assistance mode at least comprises two different modes;
    obtaining a preset auxiliary function corresponding to the current vehicle velocity in the current assistance mode according to the current assistance mode and the current vehicle velocity V;
    obtaining a torque correction gain according to the current assistance mode, the current vehicle velocity V, and the steering torque X, and correcting the steering torque X according to the torque correction gain to obtain a corrected steering torque $X_{corrected}$, or executing table look-up interpolation according to the current assistance mode, the current vehicle velocity V, and the steering torque X to obtain the corrected steering torque $X_{corrected}$;
    obtaining a motor execution torque by calculating the auxiliary function and the corrected steering torque $X_{corrected}$;
    controlling the vehicle to change direction according to the motor execution torque.

**2.** The method for controlling vehicle steering torque according to claim 1, wherein the current assistance mode at least comprises a first mode and a second mode;
obtaining the torque correction gain according to the current assistance mode, the current vehicle velocity V, and the steering torque X, comprises:

when the current assistance mode is the first mode, querying pre-stored gain data according to the current vehicle velocity and the steering torque X to obtain the torque correction gain $G_{mode1,v,x}$ when the current assistance mode is the first mode, the vehicle velocity is the V, and the steering torque is the X;
when the current assistance mode is the second mode, querying pre-stored gain data according to the current vehicle velocity and the steering torque X, or calculating in real time according to the current vehicle velocity and the steering torque X to obtain the torque correction gain $G_{mode2,v,x}$ when the current assistance mode is the second mode, the vehicle velocity is the V, and the steering torque is the X.

**3.** The method for controlling vehicle steering torque according to claim 1, wherein calculating in real time according to the current vehicle velocity and the steering torque X to obtain the torque correction gain $G_{mode2,v,x}$ when the current assistance mode is the second mode, the vehicle velocity is the V, and the steering torque is the X, comprises:

obtaining the auxiliary function $Y=F_{mode1,v}(X)$ corresponding to the current vehicle velocity V in the first mode;
obtaining the auxiliary function $Y=F_{mode2,v}(X)$ corresponding to the current vehicle velocity V in the second mode;
obtaining the torque correction gain $G_{mode1,v,x}$ when in the first mode, the vehicle velocity is the V, and the steering torque is the X;
calculating the torque correction gain $G_{mode2,v,x}$ according to the steering torque X, the auxiliary function $Y=F_{mode1,v}(X)$, the auxiliary function $Y=F_{mode2,v}(X)$, and the torque correction gain Gmodel,v,x;
wherein,

$$G_{mode2,v,x} = \frac{F^{-1}_{mode2,v}(F_{mode1,v}(X * G_{mode1,v,x}))}{X}.$$

**4.** The method for controlling vehicle steering torque according to claim 2, wherein executing table look-up interpolation according to the current assistance mode, the current vehicle velocity V, and the steering torque X to obtain the corrected steering torque $X_{corrected}$, comprises:

obtaining the auxiliary function $Y=F_{mode1,v}(X)$ corresponding to the current vehicle velocity V in the first mode;
obtaining the torque correction gain $G_{mode1,v,x}$ when in the first mode, the vehicle velocity is the V, and the steering torque is the X;
calculating a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$;
querying a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$, wherein, the assistance parameter table includes a plurality of steering torques and motor execution torques in different modes corresponding to the plurality of steering torques at different velocities;
performing linear interpolation according to the steering torque interval $[X_1,X_2]$ and the execution torque interval $[Y_1,Y_2]$ to obtain the corrected steering torque $X_{corrected}$.

**5.** The method for controlling vehicle steering torque according to claim 4, wherein performing linear interpolation according to the steering torque interval $[X_1,X_2]$ and the execution torque interval $[Y_1,Y_2]$ to obtain the corrected steering torque $X_{corrected}$, comprises:

$$X_{corrected} = X_1 + (X_2 - X_1)\frac{Y_{output} - Y_1}{Y_2 - Y_1}$$

performing linear interpolation according to $\phantom{xxxxxxxxxxxxxxxxxxxxxxxxxxxx}$ to calculate the corrected steering torque $X_{corrected}$.

**6.** The method for controlling vehicle steering torque according to claim 4, further comprising:
calculating the torque correction gain $G_{mode2,v,x}$ according to the corrected steering torque $X_{corrected}$, storing the calculated torque correction gain $G_{mode2,v,x}$ in association with the second mode, the vehicle velocity V, and the steering torque X as the gain data, after performing linear interpolation according to the steering torque interval $[X_1,X_2]$ and the execution torque interval $[Y_1,Y_2]$ to obtain the corrected steering torque $X_{corrected}$.

7. A system for controlling vehicle steering torque, comprising:

   a torque input unit configured to receive a steering torque X currently requested;
   a vehicle velocity obtaining unit configured to obtain a current vehicle velocity V of the vehicle;
   a mode identifying unit configured to identify a current assistance mode of the vehicle, wherein the current assistance mode at least comprises two different modes;
   an auxiliary function obtaining unit configured to obtain a preset auxiliary function corresponding to the current vehicle velocity in the current assistance mode according to the current assistance mode and the current vehicle velocity V;
   a torque correction unit configured to obtain a torque correction gain according to the current assistance mode, the current vehicle velocity V, and the steering torque X, and correcting the steering torque X according to the torque correction gain to obtain a corrected steering torque $X_{corrected}$; or executing table look-up interpolation according to the current assistance mode, the current vehicle velocity V, and the steering torque X to obtain the corrected steering torque $X_{corrected}$;
   an assistance calculating unit configured to obtain a motor execution torque by calculating the auxiliary function and the corrected steering torque $X_{corrected}$; and
   a steering control unit configured to control the vehicle to change direction according to the motor execution torque.

8. The system for controlling vehicle steering torque according to claim 7, wherein the current assistance mode at least comprises a first mode and a second mode;
   the torque correction unit comprises:

   a first correction sub-unit configured to when the current assistance mode is the first mode, query pre-stored gain data according to the current vehicle velocity and the steering torque X to obtain a torque correction gain $G_{mode1,v,x}$ when the current assistance mode is the first mode, the vehicle velocity is the V, and the steering torque is the X;
   a second correction sub-unit configured to when the current assistance mode is the second mode, query pre-stored gain data according to the current vehicle velocity and the steering torque X, or calculate in real time according to the current vehicle velocity and the steering torque X to obtain the torque correction gain $G_{mode2,v,x}$ when the current assistance mode is the second mode, the vehicle velocity is the V, and the steering torque is the X.

9. The system for controlling vehicle steering torque according to claim 8, wherein the second correction sub-unit is configured to:

   obtain the auxiliary function $Y=F_{mode1,v}(X)$ corresponding to the current vehicle velocity V in the first mode;
   obtain the auxiliary function $Y=F_{mode2,v}(X)$ corresponding to the current vehicle velocity V in the second mode;
   obtain the torque correction gain $G_{mode1,v,x}$ when in the first mode, the vehicle velocity is the V, and the steering torque is the X;
   calculate the torque correction gain $G_{mode2,v,x}$ according to the steering torque X, the auxiliary function $Y=F_{mode1,v}(X)$, the auxiliary function $Y=F_{mode2,v}(X)$, and the torque correction gain $G_{mode1,v,x}$;
   wherein,

   $$G_{mode2,v,x} = \frac{F^{-1}_{mode2,v}\left(F_{mode1,v}\left(X * G_{mode1,v,x}\right)\right)}{X}.$$

10. The system for controlling vehicle steering torque according to claim 7, wherein the current assistance mode at least comprises the first mode and the second mode, the torque correction unit further comprises a fourth correction sub-unit;
    the fourth correction sub-unit is configured to:

    obtain the auxiliary function $Y=F_{mode1,v}(X)$ corresponding to the current vehicle velocity V in the first mode;

obtain the torque correction gain $G_{mode1,v,x}$ when in the first mode, the vehicle velocity is the V, and the steering torque is the X;

calculate a motor execution torque $Y_{output}$ when in the first mode, the vehicle velocity is the V, and the steering torque is the V, according to the current vehicle velocity V, the steering torque X, the torque correction gain $G_{mode1,v,x}$, and the auxiliary function $Y=F_{mode1,v}(X)$;

query a pre-stored assistance parameter table according to the steering torque X and the motor execution torque $Y_{output}$ to obtain an execution torque interval $[Y_1,Y_2]$ where the motor execution torque $Y_{output}$ is located, and a steering torque interval $[X_1,X_2]$ corresponding to the execution torque interval $[Y_1,Y_2]$; the assistance parameter table includes a plurality of steering torques and motor execution torques in different modes corresponding to the plurality of steering torques at different velocities;

perform linear interpolation according to the steering torque interval $[X_1,X_2]$ and the execution torque interval $[Y_1,Y_2]$ to obtain the corrected steering torque $X_{corrected}$.

Lane keeping auxiliary function activates

ADAS sends out a steering torque request

EPS receives the steering torque request

Several power assistance curves y=fn(x)

EPS invokes a power assistance curve according to current steering assistance mode of the vehicle

EPS obtains corresponding motor torque in the power assistance curve according to the steering torque request

EPS power assistance motor executes the motor torque, the vehicle changes direction

Whether ADAS sends out the steering torque request — Yes

No

Stop working

FIG. 1

FIG. 2

receiving a steering torque X currently requested — S1

Obtaining a current vehicle velocity V of the vehicle — S2

Identifying a current assistance mode of the vehicle, wherein the current assistance mode includes two different modes — S3

Obtaining a preset auxiliary function corresponding to the current vehicle velocity in the current assistance mode according to the current assistance mode and the current vehicle velocity V — S4

Obtaining a torque correction gain according to the current assistance mode, the current vehicle velocity V, and the steering torque X, and correcting the steering torque X according to the torque correction gain to obtain a corrected steering torque $X_{corrected}$; or executing table look-up interpolation according to the current assistance mode, the current vehicle velocity V, and the steering torque X to obtain the corrected steering torque $X_{corrected}$ — S5

Obtaining a motor execution torque by calculating the assistance function and the corrected steering torque $X_{corrected}$ — S6

Controlling the vehicle to change direction according to the motor execution torque — S7

FIG. 3

Lane keeping auxiliary function
activates

↓

ADAS sends out a steering torque
request

↓

Correcting the steering torque ← Correction gain

↓

EPS receives corrected steering
torque

Current assistance mode →

EPS invokes a power assistance
curve according to current steering
assistance mode of the vehicle ← Several power assistance curves y=fn(x)

↓

EPS obtains corresponding motor
torque in the power assistance
curve according to the steering
torque request

↓

EPS power assistance motor
executes the motor torque, the
vehicle changes direction

↓

Whether ADAS sends out
the steering torque
request — Yes

↓ No

Stop working

FIG. 4

FIG. 5

FIG. 6

| 1 | 2 | 3 | 7 |
|---|---|---|---|
| torque input unit | vehicle velocity obtaining unit | mode identifying unit | steering control unit |

System for controlling vehicle steering torque

| 4 | 5 | 6 | 8 |
|---|---|---|---|
| auxiliary function obtaining unit | torque correction unit | assistance calculating unit | storage unit |

FIG. 7

## INTERNATIONAL SEARCH REPORT

| International application No. |
| --- |
| **PCT/CN2022/126832** |

| **A.** | **CLASSIFICATION OF SUBJECT MATTER** |
| --- | --- |

B62D 5/04(2006.01)i

According to International Patent Classification (IPC) or to both national classification and IPC

| **B.** | **FIELDS SEARCHED** |
| --- | --- |

Minimum documentation searched (classification system followed by classification symbols)

B62D

Documentation searched other than minimum documentation to the extent that such documents are included in the fields searched

Electronic data base consulted during the international search (name of data base and, where practicable, search terms used)

CNABS; VEN; CNKI: 车, 转向, 扭矩, 转矩, 辅助, 助力, 模式, 修正, 增益, 调整, 改变, vehicle, steering, torque, assist, mode, correct, amend, modified, gain, adjust, chang+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 114074705 A (GREAT WALL MOTOR COMPANY LIMITED) 22 February 2022 (2022-02-22)<br>     description, paragraphs 0063-0122, and figures 1-13 | 1-10 |
| A | CN 113815717 A (CHONGQING CHANG'AN AUTOMOBILE CO., LTD.) 21 December 2021 (2021-12-21)<br>     entire document | 1-10 |
| A | CN 109383613 A (SAIC MOTOR CORP., LTD.) 26 February 2019 (2019-02-26)<br>     entire document | 1-10 |
| A | CN 112407038 A (DONGFENG MOTOR CO., LTD.) 26 February 2021 (2021-02-26)<br>     entire document | 1-10 |
| A | JP 07315240 A (FUJI HEAVY INDUSTRIES LTD.) 05 December 1995 (1995-12-05)<br>     entire document | 1-10 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 December 2022** | **22 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/126832**

| Patent document cited in search report | | | Publication date (day/month/year) | Patent family member(s) | Publication date (day/month/year) |
|---|---|---|---|---|---|
| CN | 114074705 | A | 22 February 2022 | None | |
| CN | 113815717 | A | 21 December 2021 | None | |
| CN | 109383613 | A | 26 February 2019 | None | |
| CN | 112407038 | A | 26 February 2021 | None | |
| JP | 07315240 | A | 05 December 1995 | None | |

Form PCT/ISA/210 (patent family annex) (January 2015)